Europäisches Patentamt

European Patent Office

Office européen des brevets

(11) Publication number: **0 039 143**
**B1**

(12) **EUROPEAN PATENT SPECIFICATION**

(45) Date of publication of patent specification: **18.09.85**

(21) Application number: **81301387.7**

(22) Date of filing: **31.03.81**

(51) Int. Cl.⁴: **G 01 B 11/24, G 01 B 11/00**

(54) Method and apparatus for determining the shape of objects.

(30) Priority: **31.03.80 GB 8010747**

(43) Date of publication of application:
**04.11.81 Bulletin 81/44**

(45) Publication of the grant of the patent:
**18.09.85 Bulletin 85/38**

(84) Designated Contracting States:
**BE DE FR IT NL SE**

(56) References cited:
**DE-A-2 725 756**
**FR-A-2 277 326**
**FR-A-2 379 801**
**GB-A-1 561 292**

**OPTICAL ENGINEERING, vol. 18, no. 4, July/August 1979, BELLINGHAM (GB) J. JOHANSSON et al.: "Computer-controlled laser beams in object dimension measurements", pages 384-389**

(73) Proprietor: **Harmo Industries Limited Wharfdale Road Tyseley Birmingham BII 2DF (GB)**

(73) Proprietor: **THE UNIVERSITY OF BIRMINGHAM PO Box 363 Birmingham B15 2TT (GB)**

(72) Inventor: **Poole, Michael 9 Yelverton Drive Edgbaston Birmingham (GB)**
Inventor: **Edwards, Christopher Sanders 30 Clarry Drive Four Oaks Sutton Coldfield West Midlands (GB)**
Inventor: **Hon, Bernard 65 Haycombe Drive Bath (GB)**
Inventor: **Ghazizadehs, Fereidoon 29 Brandhall Court Wolverhampton Road Oldbury Warley West Midlands (GB)**
Inventor: **Lim, Kah-Hooi No. 11 Jalan Mata Air Taman Genting Selapak Kuala Lumpur (MY)**

(74) Representative: **Leach, John Nigel FORRESTER & BOEHMERT Widenmayerstrasse 4/I D-8000 München 22 (DE)**

## Description

This invention is concerned with a method of and an apparatus for determining the shape of an object, specifically the external shape of an object or a portion of an object.

The invention has been developed in connection with the manufacture of vehicle exhaust pipes and for convenience the following description will be confined to this application. However, it is to be understood that there is no limitation in this regard as the method and apparatus of the invention may be used for determining the shape of other objects, including other elongate objects, but with the exclusion of any objects which have re-entrant shapes.

Exhaust pipes are made with a wide variety of different shapes, including straight sections of different lengths and bends which are curved on different radii and in different directions. It is important in the manufacture of pipes of a particular shape that they are all accurately formed to the same required shape, and one problem which arises is that of accurately determining the shape of a pipe which is required to be reproduced.

DE—A—2,725,756 discloses an apparatus for determining the three dimensional shape of an object comprising, a support for the object, a carriage, means to cause rectilinear relative movement between the carriage and the support along a first axis, means to detect the relative position of the carriage and the support along the first axis and data storage means to store information relating to said position, the carriage having scanning means to direct a first beam of light from a laser in a first direction lying in a plane normal to said first axis, and to direct a second beam of light from a laser in a second direction at right angles to the first direction and lying in said plane, or a plane parallel to said plane to cause each of said first and second beams to scan the object, a detecting means fixed relative to the carriage for each beam comprising a means to collect light from its associated beam and to direct the light to a light responsive means to detect interruption of the respective beam during its scan and hence the locations of opposite edges of the portion of the object scanned by the respective beam, said locations detected by the detecting means constituting information representing the shape of the scanned portion of the object, means for causing relative movement between the carriage and the object along said first axis whereby the beams effect a number of scans at different positions on the object along said first axis, and data storage means to store information relating to the location of said edge portions at each of said axial scanning positions and means to process said stored information to determine the three dimensional shape of the object.

DE—A—2,725,756 also discloses a method for determining the three dimensional shape of an object comprising the steps of, supporting the object, causing relative rectilinear movement between a carriage and the object along a first axis, detecting the relative position of the carriage and the object along the first axis and storing information relating to said position, directing a first beam of light from a laser in a first direction lying in a plane normal to said first axis, and directing a second beam of light from a laser in a second direction at right angles to the first direction and lying in said plane, or a plane parallel to said plane, causing each of said first and second beams to scan the object and directing the light to a light responsive means to detect interruption of the respective beam during its scan traverse and hence the locations of opposite edges of the portion of the object scanned by the respective beam, said locations detected by the detecting means constituting information representing the shape of the scanned portion of the object, causing relative movement between the carriage and the object along said first axis whereby the beams effect a number of scans at different positions on the object along said first axis, and storing information relating to the location of said edge portions at each of said axial scanning positions and processing said stored information to determine the three dimensional shape of the object.

More particularly, DE—A—2,725,756 describes an apparatus and method in which each laser is carried on a large rotating disc which is to be rotated in precise synchronism with a further disc carrying a photocell. Thus each disc projects its associated beam in a two dimensional scan so that the scanning beam is moved across the object with components of motion relative to the object that are parallel to two mutually orthogonal axes. Such an apparatus and method is impracticable particularly to determine the size of relatively large objects, for example having a transverse dimension of up to 1 metre because of the difficulty, in engineering terms, of achieving precise synchronised rotation of large discs. Moreover, the two dimensional scanning pattern necessitates relatively complicated computing techniques.

The present invention overcomes these problems by providing in the apparatus that the scanning means causes each of said first and second beams to scan the object in a uni-directional rectilinear scan pattern whereby the respective beam is directed in parallel directions lying in said plane, or a plane parallel to said plane, throughout a scan, said scanning means comprising, for each beam, a laser, translatorily fixed relative to the carriage, a parabolic mirror, means at the focal centre of the parabolic mirror to direct light from the laser uni-directionally across the parabolic mirror whereby the parabolic mirror reflects the light in directions which are mutually parallel throughout a scan and which advance uni-directionally in each scan and in succeeding scans.

The invention also provides a method in which the beams scan the object in a uni-directional rectilinear scan pattern whereby the respective beam is directed in parallel directions laying in said plane, or a plane parallel to said plane, throughout a scan, the light, for each beam, issuing from a laser, translatorily fixed relative to the carriage and being directed from the laser uni-directionally across a parabolic mirror carried by the carriage whereby the parabolic mirror reflects the light in directions which are mutually parallel throughout a scan and which advance uni-directionally in each scan and in succeeding scans, and collecting light from each beam and directing the light to said light responsive means.

The invention will now be described by way of example, with reference to the accompanying drawings, in which:—

FIGURE 1 is a plan view of an apparatus embodying the invention;

FIGURE 2 is an end view of the apparatus;

FIGURE 3 is an end view of the scanning unit of the apparatus;

FIGURE 4 is a section on the line A—A in Figure 3;

FIGURE 5 is a section on the line C—C in Figure 3.

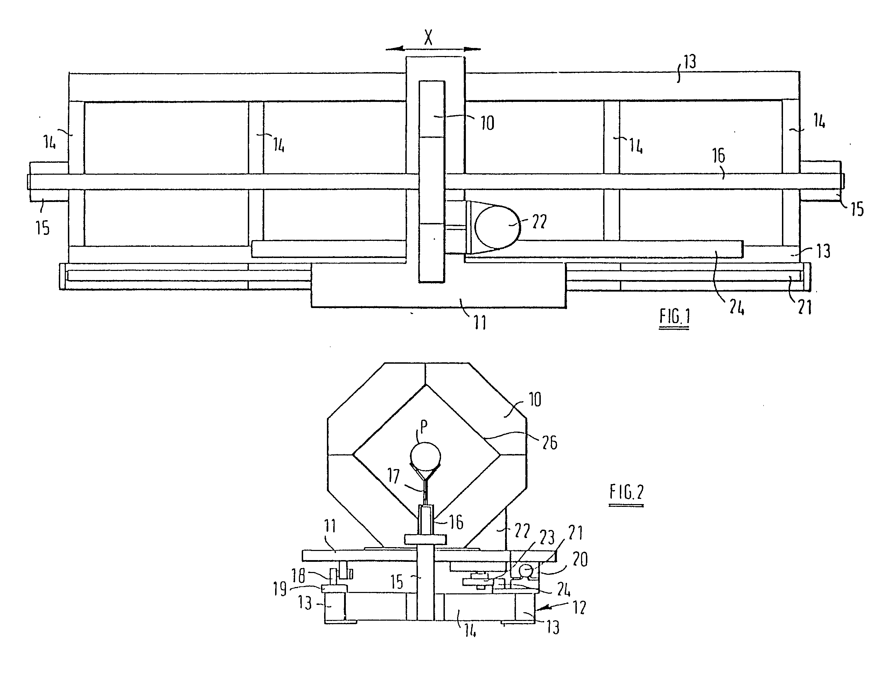

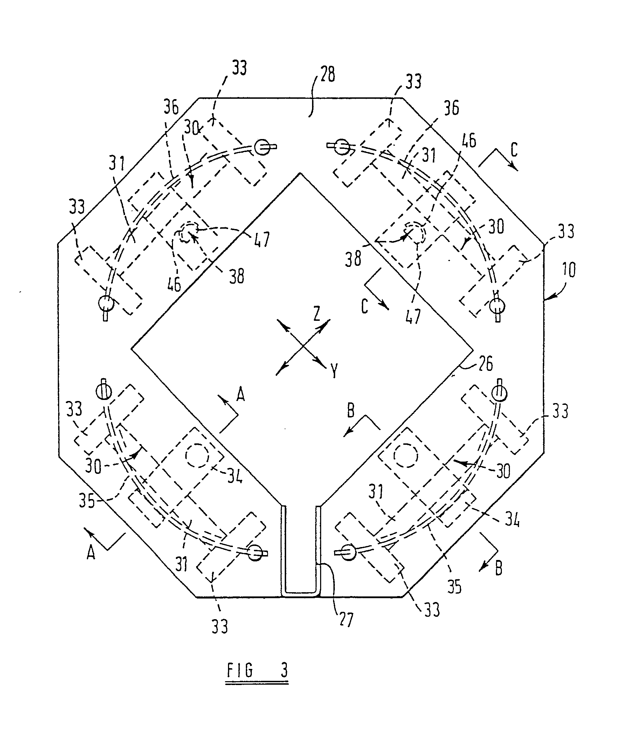

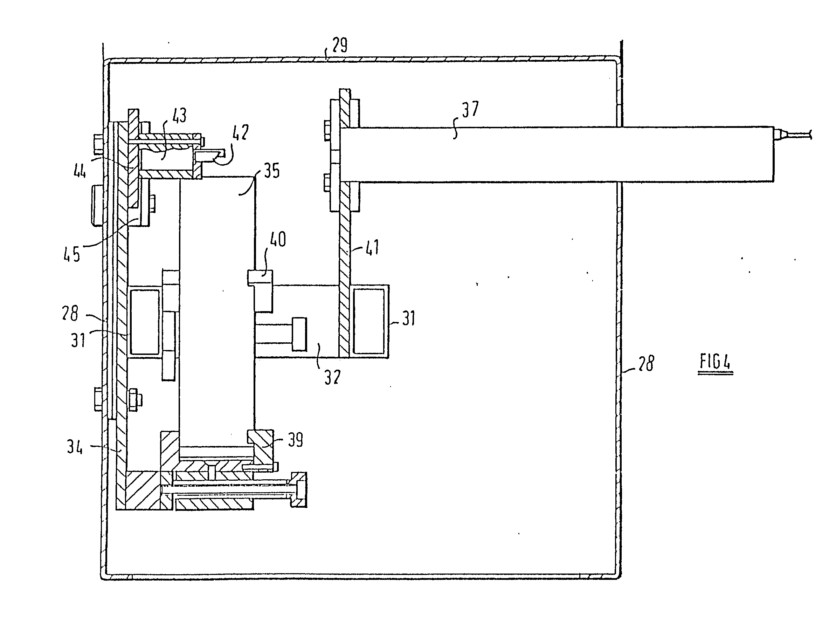

The apparatus illustrated in Figures 1 to 5 of the drawings comprises a scanning unit 10 mounted on a carriage 11 which is movable along a first scanning axis X on a base 12 between two end stops.

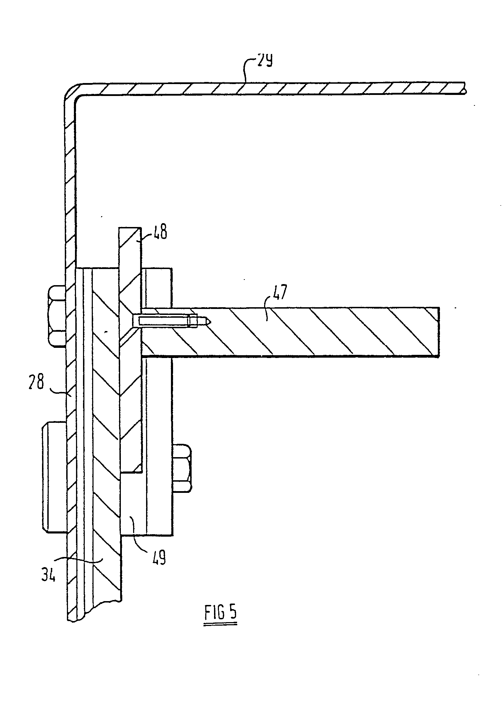

Referring to Figures 1 and 2, the base 12 comprises two longitudinal members 13 interconnected by a number of cross members 14. Two posts 15 at the ends of the base carry a longitudinal beam 16 provided with adjustable Y-shaped supports 17 for supporting an exhaust pipe P whose shape is to be determined.

The carriage 11 is in the form of a table of T-shape in plan provided on its underside with a roller 18 arranged to run on a longitudinal track 19 and with two guides 20 in sliding engagement with a longitudinal rail 21.

The carriage is driven along the axis X by a reversible electric motor 22 mounted on the carriage, the drive shaft of the motor extending downwardly and carrying a gearwheel 23 which meshes with a rack 24 extending longitudinally of the base.

Referring to Figures 3 to 5, the scanning unit 10 comprises a housing having a central square opening 26 through which the exhaust pipe P extends, and a cut-away part 27 for the passage of the beam 16 carrying the pipe. The housing has end walls 28 and an outer wall 29 and its interior opens inwardly into the central opening 26.

Mounted inside the housing along the respective sides of the opening 26 are four rectangular frames 30, each comprising two longitudinal members 31 and two cross members 32, each member being of hollow rectangular shape. Each frame is secured to one of the side walls 28 by two mounting plates 33 and carries a support plate 34.

The frames 30 carry two pairs of parabolic mirrors 35, 36, two laser units 37 associated with the respective mirrors 35 and two light detectors 38 associated with the respective mirrors 36.

Each mirror is held at its centre by an adjustable retainer 39 mounted on a support block secured to the support plate 34 of the associated frame 30, and adjacent its ends by two further adjustable retainers 40 mounted on support blocks secured to the frame.

Each laser unit 37 is mounted on a support plate 41 secured to the associated frame 30 and is arranged to direct the beam of light generated thereby towards a mirror 42 disposed at 45° to the beam and carried by the drive shaft of an electric motor 43. This motor is mounted on a base plate 44 secured by a keeper plate 45 to the support plate 34 of the associated frame.

The rotatable mirrors 42 are disposed at the focal centres of the respective parabolic mirrors 35 and are arranged to divert the beams of light issuing from the laser units 37 so that each beam impinges on the associated mirror 35 and is reflected thereby over a part of each revolution of the motor 43, whereby the reflected beam is traversed through an infinite number of successive parallel positions. These positions of the reflected beam of one of the parabolic mirrors are parallel to a second scanning axis Y and the positions of the reflected beam of the other mirror are parallel to a third scanning axis Z, the axes Y and Z being disposed at right angles to one another and in a common plane at right angles to the first scanning axis X.

The light detectors 38 are disposed at the focal centres of the respective parabolic mirrors 36. Each detector comprises a strip of photodiodes 46 mounted on a part-circular face of a support 47 (Figure 5) mounted on a base plate 48 which is secured by a keeper plate 49 to the support plate 34 of the associated frame 30.

The apparatus is connected to computer and data storage means and operates as follows.

The scanning unit 10 is moved along the pipe P by the drive motor 22 and the two motors 43 are rotated in synchronism with one another so that the light beams from the laser units 37 scan the pipe at regularly spaced locations along the axis of movement of the carriage. Thus, the light beams effect one traverse of the scanning zone in each of a number of successive, regularly spaced parallel planes containing the scanning axes Z and Y and at right angles to the scanning axis X.

On each traverse, each light beam is interrupted by the pipe between two points at opposite sides of the pipe. Such interruption of the beam and hence the location of said points on the Z or Y axis, as the case may be, is detected by the associated detector 38. This information is transmitted in the form of electrical signals to the computer and data storage means.

These means therefore store information as to the location of the said two points on each of the Z and Y axes for each scanned position along the X axis.

From this information the centre of the pipe at each scanned position along the X axis can be determined, and the shape of the pipe can be determined by comparing the positions of the centres.

The shape of the pipe is determined in the following manner.

The computer reads the data storage memories in which the information is stored, and computes the centre point of the pipe for a first scanning position and the centre point for the next (second) scanning position. The position at which the centre point of the third scanning position would be located if the scanned section of the pipe is straight, can then be predicted. If, when the third centre point is computed, it is in the predicted position, the centre point for the next (fourth) scanning position is compared with the position predicted for it by comparing the first and third centre points, the information regarding the second centre point not being utilised.

The process is repeated for each successive scanning position, comparing the first centre point with the centre point determined for the last preceding scanning position, until a centre point is found not to be in its predicted position. This indicates that a bend in the pipe has been reached. The first and last centre points are then stored.

The process is then repeated until a straight section of pipe is detected whereupon the first and last centre points of this section are stored.

The angle of the bend between the two straight pipe sections can then be determined by computing the angle between, in effect, a line between the stored first and last centre points of the first section and a line between the first and last centre points of the second section.

The information thus obtained representing straight sections of the pipe and the angle and direction of intermediate bends, is then stored.

The information may be used in a number of ways. For example, it may be fed to a computer-controlled machine for automatically forming pipes so that the machine reproduces the pipe exactly.

Various modifications may be made within the scope of the invention. A single laser could be used with means for splitting its light beam to provide the two beams for scanning the pipe. The beams need not be in a common plane but in parallel planes at a small fixed distance apart. The pipe could be moved relative to the lasers to cause their light beams to effect a succession of scans along the pipe.

## Claims

1. An apparatus for determining the three dimensional shape of an object (P) comprising, a support (17) for the object (P), a carriage (11), means (22) to cause rectilinear relative movement between the carriage (11) and the support (17) along a first axis (X), means to detect the relative position of the carriage (11) and the support (17) along the first axis (X) and data storage means to store information relating to said position, the carriage (11) having scanning means (35, 37, 42, 43) to direct a first beam of light from a laser (37) in a first direction (Y) lying in a plane normal to said first axis (X), and to direct a second beam of light from a laser (37) in a second direction (Z) at right angles to the first direction and lying in said plane, or a plane parallel to said plane, and to cause each of said first and second beams to scan the object (P), a detecting means (36, 38) fixed relative to the carriage for each beam comprising a means (36) to collect light from its associated beam and to direct the light to a light responsive means (38) to detect interruption of the respective beam during its scan and hence the locations of opposite edges of the portion of the object (P) scanned by the respective beam, said locations detected by the detecting means constituting information representing the shape of the scanned portion of the object, said means (22) causing, in use, relative movement between the carriage (11) and the object along said first axis whereby the beams effect a number of scans at different positions on the object (P) along said first axis (X), and data storage means to store information relating to the location of said edge portions at each of said axial scanning positions and means to process said stored information to determine the three dimensional shape of the object (P), characterised in that said scanning means (35, 37, 42, 43) causes each of said first and second beams to scan the object (P) in a uni-directional rectilinear scan pattern whereby the respective beam is directed in parallel directions lying in said plane, or a plane parallel to said plane, throughout a scan, said scanning means (35, 37, 42, 43) comprising, for each beam, a laser (37) translatorily fixed relative to the carriage (11), a parabolic mirror (35), means (42) at the focal centre of the parabolic mirror (35) to direct light from the laser (37) uni-directionally across the parabolic mirror (35) whereby the parabolic mirror reflects the light in directions which are mutually parallel throughout a scan and which advance uni-directionally in each scan and in succeeding scans.

2. Apparatus according to Claim 1 wherein said means to direct the light from the laser uni-directionally across the mirror comprises a rotatable mirror (42) disposed at the focal centre of the parabolic mirror (35) arranged to direct a beam of light from the laser (37) onto the parabolic mirror (35).

3. Apparatus according to either of the preceding claims wherein each detecting means (36, 38) comprises a light responsive means (38) located at the focal centre of a respective parabolic mirror (36) arranged to direct the light reflected by the parabolic mirror associated with the respective laser (37) the light responsive means (38).

4. Apparatus according to any one of the preceding claims wherein the support (17) is fixed and the carrier (11) is movable along said first axis (X).

5. A method for determining the three dimensional shape of an object (P) comprising the steps of, supporting the object (P), causing relative rectilinear movement between a carriage (11) and the object (P) along a first axis (X), detecting the relative position of the carriage (11) and the object (P) along the first axis (X) and storing information relating to said position, directing a first beam of light from a laser (37) in a first direction (Y) lying in a plane normal to said first axis (X), and directing a second beam of light from a laser (37) in a second direction (Z) at right angles to the first direction and lying in said plane, or a plane parallel to said plane, causing each of said first and second beams to scan the object and directing the light to a light responsive means (38) to detect interruption of the respective beam during its scan and hence the locations of opposite edges of the portion of the object (P) scanned by the respective beam, said locations detected by the detecting means constituting information representing the shape of the scanned portion of the object (P), causing relative movement between the carriage (11) and the object along said first axis (X) whereby the beams effect a number of scans at different positions on the object along said first axis (X), and storing information relating to the location of said edge portions at each of said axial scanning positions and processing said stored information to determine the three dimensional shape of the object, characterised in that the beams scan the object (P) in a uni-directional rectilinear scan pattern whereby the respective beam is directed in parallel directions lying in said plane, or a plane parallel to said plane, throughout a scan, the light, for each beam, issuing from a laser (37), translatorily fixed relative to the carriage (11) and being directed from the laser uni-directionally across a parabolic mirror (35) carried by the carriage (11) whereby the parabolic mirror (35) reflects the light in directions which are mutually parallel throughout a scan and which advance unidirectionally in each scan and in succeeding scans, and collecting light from each beam and directing the light to said light responsive·means.

6. A method according to Claim 5 wherein the object (P) is maintained stationary and the carriage (11) is moved along said first axis (X).

**Revendications**

1. Appareil de détermination de la forme tridimensionnelle d'un objet (P) comprenant un support (17) de l'objet (P), un chariot (11), un dispositif (22) entraînant un mouvement rectiligne relatif entre le chariot (11) et le support (17) le long d'un premier axe (X), un dispositif de détection de la position relative du chariot (11) et du support (17) le long du premier axe (X) et des moyens de stockage des données pour mettre en mémoire les informations relatives à ladite position, le chariot (11) comprenant un dispositif de balayage (35, 37, 42, 43) capable d'orienter un premier faisceau lumineux délivré par un laser (37) dans une première direction (Y) située dans un plan perpendiculaire audit premier axe (X), et d'orienter un second faisceau lumineux émis par un laser (37) dans une seconde direction (Z) à angles droits par rapport à la première direction et située dans ledit plan ou dans un plan parallèle audit plan, et de faire balayer l'objet (P) par chacun des premier et second faisceau, un dispositif détecteur (36, 38) fixé relativement au chariot pour chaque faisceau comprenant un dispositif (36) qui collecte la lumière de son faisceau associé et oriente cette lumière vers un dispositif sensible à la lumière (38) afin de détecter l'interruption du faisceau correspondant pendant son balayage et donc de déterminer les emplacements des bords opposés de la portion de l'objet (P) balayée par le faisceau respectif, lesdits emplacements détectés par le dispositif détecteur constituant des informations représentatives de la forme de la portion balayée de l'objet, ce dispositif (22) établisssant, en service, un mouvement relatif entre le chariot (11) et l'objet le long dudit premier axe de façon que les faisceaux effectuent un certain nombre de balayages en différentes positions de l'objet (P) le long dudit premier axe (X), et des moyens de stockage des données pour mettre en mémoire les informations relatives à l'emplacement desdites portions de bord pour chacune des positions de balayage axial et des moyens de traitement desdites informations mémorisées pour déterminer la forme tridimensionnelle de l'objet (P), caractérisé par le fait que les moyens de balayage (35, 37, 42, 43) font balayer l'objet (P) par chacun des premier et second faisceaux, selon une configuration de balayage rectiligne uni-directionnelle selon laquelle le faisceau respectif est orienté dans des directions parallèles situées dans ce plan, ou dans un plan parallèle à ce plan, pendant tout un balayage, lesdits dispositifs de balayage (35, 37, 42, 43) comprenant, pour chaque faisceau, un laser (37) fixé de façon à pouvoir être translaté par rapport au chariot (11), un miroir parabolique (35), un dispositif (42) placé au foyer du miroir parabolique (35) de façon à orienter la lumière émise par le laser (37) uni-directionnellement en travers du miroir parabolique (35) de façon que le miroir parabolique réfléchisse la lumière dans des directions qui sont mutuellement parallèles pendant tout un balayage et qui progressent uni-directionnellement dans chaque balayage et dans des balayages successifs.

2. Appareil selon la revendication 1, caractérisé par le fait que les dispositifs d'orientation de la lumière délivrée par le laser uni-directionnellement en travers du miroir comprennent un miroir tournant (42) placé au foyer d'un miroir parabolique (35) et capable d'orienter un faisceau lumineux délivré par le laser (37) sur le miroir parabolique (35).

3. Appareil selon l'une quelconque des revendications précédentes, caractérisé par le fait que le dispositif détecteur (36, 38) comprend un dispositif sensible à la lumière (38) placé au foyer d'un miroir parabolique respectif (36) capable d'orienter la lumière réfléchie par le miroir parabolique associé au laser respectif (37) et au dispositif sensible à la lumière (38).

4. Appareil selon l'une quelconque des revendications précédentes, caractérisé par le fait que le support (17) est fixe et le chariot (11) mobile le long du premier axe (X).

5. Procédé de détermination de la forme tridimensionnelle d'un objet (P) comprenant les opérations de: maintien de l'objet (P), établissement d'un mouvement rectiligne relatif entre un chariot (11) et l'objet (P) le long d'un premier axe (X), la détermination de la position relative du chariot (11) et de l'objet (P) le long du premier axe (X) et la mise en mémoire des informations relatives à ladite position, l'orientation d'un premier faisceau lumineux délivré par un laser (37) dans une première direction (Y) située dans un plan normal audit premier axe (X), et l'orientation d'un second faisceau lumineux délivré par un laser (37) dans une seconde direction (Z) à angles droits avec la première direction et situé dans ledit plan ou dans un plan parallèle audit plan, la commande du balayage de l'objet par chacun des premier et second faisceaux et l'orientation de la lumière vers un dispositif sensible à la lumière (38) qui détecte l'interruption du faisceau respectif pendant son balayage et donc les emplacements des bords opposés de la portion de l'objet (P) balayée par le faisceau respectif, lesdits emplacement détectés par les dispositifs détecteurs constituant des informations représentatives de la forme de la portion balayée de l'objet (P), l'établissement d'un mouvement relatif entre le chariot (11) et l'objet le long du premier axe (X) de façon que les faisceau effectuent un certain nombre de balayages en différentes positions de l'objet le long du premier axe (X), et le stockage d'informations relatives à l'emplacement desdites portions de bord pour chacune des positions de ce balayage axial et le traitement de ces informations mises en mémoire pour définir la forme tridimensionnelle de l'objet, caractérisé par le fait que les faisceaux balaient l'objet (P) selon une configuration de balayage rectiligne uni-directionnel selon laquelle le faisceau respectif est orienté dans des directions parallèles situées dans ce plan ou dans un plan parallèle à ce plan, pendant tout un balayage, la lumière, pour chaque faisceau, provenant d'un laser (37) fixé de façon à pouvoir être translaté par rapport au chariot (11) et étant orienté à partir du laser uni-directionnellement en travers d'un miroir parabolique (35) porté par le chariot (11) afin que le miroir parabolique (35) réfléchisse la lumière dans des directions qui sont mutuellement parallèles pendant tout un balayage et qui progressent uni-directionnellement dans chaque balayage et dans les balayages successifs, et en collectant la lumière de chaque faisceau et en orientant la lumière vers ledit dispositif sensible à la lumière.

6. Procédé selon la revendication 5, dans lequel l'objet (P) est maintenu fixe et le chariot (11) se déplace le long du premier axe (X).

**Patentansprüche**

1. Vorrichtung zum Bestimmen der dreidimensionalen Form eines Objekts (P), mit einem Objekthalter (17), einem Schlitten (11), mit einem Mittel (22) zur Bewirkung einer geradlinigen Relativbewegung zwischen dem Schlitten (11) und dem Halter (17) entlange einer ersten Achse (X), mit einem Mittel zur Feststellung der Relativposition des Schlittens (11) und des Halters (17) entlang der ersten Achse (X) und mit einem Datenspeichermittel zum Speichern einer diese Position betreffenden Information, wobei der Schlitten Abtastmittel (35, 37, 42, 43) aufweist, um einen ersten Lichtstrahl von einem Laser (37) in eine in einer zu der ersten Achse (X) rechtwinkligen Ebene liegende erste Richtung (Y) und einen zweiten Lichtstrahl von einem Laser (37) in eine zu der ersten Richtung (Y) rechtwinklige und in der Ebene liegende oder in einer zu dieser Ebene parallelen zweiten Richtung (Z) zu richten und ein Abtasten des Objekts (P) durch den ersten und zweiten Strahl zu bewirken, relativ zu dem Schlitten feste Mittel (36, 38) für jeden der Strahlen mit einem Mittel (36) zum Sammeln von Licht des zugehörigen Lichtstrahls und zum Richten des Lichts zu einem lichtempfindlichen Mittel (38), um eine Unterbrechung des jeweiligen Lichtstrahls während des Abtastens und so die Anordnung gegenüberliegender Ecken des von dem jeweiligen Lichtstrahl abgetasteten Abschnitts des Objekts (P) zu erfassen, wobei die von den Mitteln (36, 38) ermittelten Orte eine die Form des abgetasteten Abschnitts wiedergebende Information darstellen, das Mittel (22) bei Verwendung eine Relativbewegung zwischen dem Schlitten (11) und dem Objekt entlang einer ersten Achse bewirkt, wodurch die Strahlen an verschiedenen Orten des Objekts entlang der ersten Achse (X) eine Anzahl von Abtastungdurchgängen durchführen, und mit einem Datenspeichermittel zum Speichern einer die Anordnung der Eckenabschnitte wiedergebenden Information bei jeder der axialen Abtastdurchgänge und mit einem Mittel zum Verrechnen der gespeicherten Information zur Bestimmung der dreidimensionalen Form des Objekts (P), dadurch gekennzeichnet, daß das Abtastmittel (35, 37, 42, 43) den ersten und den zweiten Strahl dazu veranlaßt, das Objèkt (P) in einem in eine Richtung ausgerichteten, geradlinigen Muster abzutasten, wodurch der jeweilige Strahl während des Abtastens in in der Ebene oder in einer zu dieser Ebene parallele Ebene liegende parallele Richtungen gerichtet wird, wobei die Abtastmittel (35, 37, 42, 43) für jeden Strahl einen relativ zu dem Schlitten längsverschiebbar befestigten Laser (37), einen parabolischen Spiegel (35) und ein Mittel (42) in dem Brennpunkt des parabolischen Spiegels (35) aufweisen, um Licht von dem Laser (37) in eine Richtung über den parabolischen Spiegel (35) zu richten, wodurch der parabolische Spiegel das Licht in Richtungen reflektiert, die während des Abtastens zueinander parallel sind und die die während eines Abtastdurchgangs und in aufeinander folgenden Abtastvorgängen in einer Richtung voranschreiten.

2. Vorrichtung nach Anspruch 1, wobei das Mittel zum Richten von Licht von dem Laser in eine Richtung über den Spiegel einen indem Brennpunkt des parabolischen Spiegels (42) angeordneten drehbaren Spiegel (42) aufweist, der dazu eingerichtet ist, einen Lichtstrahl von dem Laser (37) auf den parabolischen Spiegel (35) zu werfen.

3. Vorrichtung nach einem der vorangehenden Ansprüche, wobei jedes der Mittel (36, 38) ein in dem Brennpunkt des jeweiligen parabolischen Spiegels (36) angeordnetes lichtempfindliches Mittel (38) aufweist, wobei der Spiegel dazu eingerichtet ist, das von dem dem jeweiligen Laser (37) zugeordneten parabolischen Spiegel reflektierte Licht auf das lichtempfindliche Mittel zu richten.

4. Vorrichtung nach einem der vorangehenden Ansprüche, wobei die Halterung (17) fest und der Schlitten (11) entlang der ersten Achse (X) verschiebbar ist.

5. Verfahren zum Bestimmen der dreidimensionalen Form eines Objekts (P) unter Halten des Objekts (P), Verursachen einer geradlinigen Relativbewegung zwischen einem Schlitten (11) und dem Objekt (P) entlang einer ersten Achse (X), Ermitteln der Relativposition des Schlittens (11) und des Objekts (P) entlang einer ersten Achse (X) und Speichern der diese Position wiedergebenden Information, Richten eines ersten Lichtstrahles von einem Laser (37) in eine in einer zu der ersten Achse (X) rechtwinkligen ersten Ebene liegende erste Richtung (Y), und Richten eines zweiten Lichtstrahles von einem Laser (37) in eine zweite Richtung (Z) rechtwinklig zu der ersten Richtung und in der Ebene oder einer zu dieser Ebene parallele Ebene liegend, Verursachen einer Abtastung des Objekts durch den ersten und den zweiten Strahl und Richten des Lichtes auf ein lichtempfindliches Element (38), um die Unterbrechung des jeweiligen Strahls während des Abtastens und so die Anordnung der gegenüberliegenden Ecken des von dem jeweiligen Strahl abgetasteten Abschnitt des Objekts (P) zu erfassen, wobei die von den Mitteln (36, 38) ermittelten Orte eine die Form des abgetasteten Abschnitts wiedergebende Information darstellen, Verursachen einer Relativbewegung zwischen dem Schlitten (11) und dem Objekt entlang einer ersten Achse (X), wodurch die Strahlen an verschiedenen Orten des Objekts entlang der ersten Achse (X) eine Anzahl von Abtastungdurchgängen durchführen, und Speichern einer die Orte der Eckenabschnitte wiedergebenden Information bei jeder der axialen Abtastdurchgänge und Verrechnen der gespeicherten Information zur Bestimmung der dreidimensionalen Form des Objekts, dadurch gekennzeichnet, daß die Abtaststrahlen das Objekt (P) in einem in eine Richtung ausgerichteten, geradlinigen Muster abtasten, wodurch der jeweilige Strahl während des Abtastens in in der Ebene oder in einer zu dieser Ebene parallele Ebene liegende parallele Richtungen gerichtet wird, das Licht für jeden Strahl von einem relativ zu dem Schlitten längsverschiebbar befestigten Laser (37) kommt, und von dem Laser in einer Richtung über einen parabolischen Spiegel (35), der von dem Schlitten (11) getragen wird, gerichtet ist, wodurch der parabolische Spiegel (35) das Licht in Richtungen reflektiert, die während des Abtastens zueinander parallel sind und die die während eines Abtastdurchgangs und in aufeinander folgenden Abtastvorgängen in einer Richtung voranschreiten, und Richten des Lichts auf die lichtempfindlichen Elemente.

6. Verfahren nach Anspruch 5, wobei das Objekt (P) stationär gehalten und der Schlitten (11) entlang der ersten Achse (X) bewegt wird.

X

13

14    14    10    14    14    16

15    15    15

22    13

24    21

11    FIG. 1

10

P    26

17

16

11    22    23    21

18    20

19    13    15    24    12

13    14    13

FIG. 2

0 039 143

FIG 3

FIG4

FIG 5